# EUROPÄISCHE PATENTSCHRIFT

(11) **EP 0 634 119 B1**
(45) Veröffentlichungstag und Bekanntmachung des Hinweises auf die Patenterteilung: **06.05.1998**
(21) Anmeldenummer: 94110343.4
(22) Anmeldetag: 04.07.1994
(51) Int. Cl.: A47B 13/02, F16B 12/44

(54) **Möbelstück**
Furniture piece
Pièce de meuble

(30) Priorität: 06.07.1993 DE 9310033 U
(43) Veröffentlichungstag der Anmeldung: 18.01.1995
(73) Patentinhaber: HORST HÄUSSER METALLWAREN GmbH, D-73635 Rudersberg (DE)
(72) Erfinder: Häusser, Horst, D-73635 Rudersberg (DE)
(74) Vertreter: KOHLER SCHMID + PARTNER

(56) Entgegenhaltungen:
- EP-A- 0 353 175
- EP-A- 0 467 236

## Beschreibung

Die Erfindung betrifft ein Möbelstück, insbesondere Tisch, mit mindestens einem Verbindungsstück, das zwei über einen Verbindungsabschnitt miteinander verbundene Abschnitte zur Verbindung des Verbindungsstücks mit einem Gestell und mit einem vorzugsweise zum Halten einer Platte bestimmten Rahmen aufweist.

Ein derartiges Möbelstück ist beispielsweise aus der EP 0 467 236 bekanntgeworden.

Das bekannte Möbelstück weist ein Verbindungsstück auf, dessen einer schwertförmig ausgebildeter Abschnitt in eine Ausnehmung des Rahmens gesteckt werden kann. Ein anderer Abschnitt des Verbindungsstücks kann entsprechend in eine Ausnehmung des Gestells eingeführt werden. Bei zu großer oder falscher Belastung besteht die Gefahr des Verbiegens der langgestreckten Abschnitte beim Einführen in die vorgesehenen Ausnehmungen. Weiterhin muß beim Einführen der Abschnitte darauf geachtet werden, daß der richtige Abschnitt in die jeweilige Ausnehmung gesteckt wird, da die Abschnitte unterschiedlich und nicht gleich ausgebildet sind. Nach dem Einführen müssen die Abschnitte mit dem Rahmen oder dem Gestell zusätzlich durch Befestigungsmittel gesichert werden. Das Verbindungsstück und die Ausnehmungen des Rahmens und des Gestells können nur dann exakt zusammenwirken, wenn die Größe der Bauteile präzise gefertigt und aufeinander abgestimmt ist. Daher ist das bekannte Verbindungsstücks aufwendig und teuer in der Herstellung.

Folglich liegt der Erfindung die Aufgabe zugrunde, das bekannte Verbindungsstück derart weiterzuentwickeln, daß die vorgenannten Nachteile vermieden werden.

Diese Aufgabe wird erfindungsgemäße dadurch gelöst, daß beide Abschnitte im Querschnitt jeweils ein Paar von V-förmig angeordneten Schenkeln aufweisen, die an der Spitze des "V" verbunden sind, und daß die Spitzen der beiden "V" voneinander einen kleineren Abstand haben als andere Teile des einen Paars der Schenkel von dem anderen Paar.

Die Erfindung schafft ein neuartiges Verbindungsstück, das es insbesondere gestattet, Stangen mit Mehrkantprofil, insbesondere Rechteckprofil, vorzugsweise quadratischem Profil im Abstand so zu verbinden, daß die Querschnitte der Stangen über Eck verlaufen, oder Platten in analoger Weise in ihrem Endbereich miteinander zu verbinden, oder aber auch eine Stange, insbesondere mit einem der oben genannten Profile, mit einer Platte zu verbinden.

Die Erfindung besteht darin, daß das Verbindungsstück im Querschnitt zwei Abschnitte mit jeweils einem Paar von V-förmig angeordneten Schenkeln aufweist, die an der Spitze des "V" verbunden sind, daß die Spitzen der beiden "V" voneinander einen kleineren Abstand haben als andere Teile des einen Paars der Schenkel von dem anderen Paar, und daß die Spitzen durch einen Verbindungsabschnitt verbunden sind. Die V-Form eines Paares ist dabei an die innerhalb dieses V aufzunehmende Querschnittsfläche der Stange oder der Platte angepaßt. In den allermeisten Fällen werden daher die beiden Schenkel des "V" miteinander einen Winkel von 90° einschließen.

Im einfachsten Fall ist der Verbindungsabschnitt, der die beiden "V" miteinander verbindet, im Durchschnitt gerade. Vorzugsweise ist mindestens einer der Schenkel des einen Paars zu einem Schenkel des anderen Paars parallel. Wenn die Schenkel eines Paars miteinander einen Winkel von 90° einschließen, so können somit jeweils zwei Schenkel zueinander parallel sein, was bei der Verbindung von Stangen mit quadratischem Querschnitt ebenfalls dazu führt, daß die miteinander verbundenen Stangen jeweils zwei zueinander parallele Seitenflächen haben.

Das Verbindungsstück selbst kann als Strangprofil in beliebiger Länge hergestellt werden und bei Bedarf abgeschnitten werden. Etwa erforderliche Befestigungslöcher für Schrauben oder dergleichen Befestigungsmittel zum Befestigen der Stangen oder Platten können bei der Herstellung vorgesehen werden, und/ oder sie werden nach dem Abschneiden je nach dem Anwendungsfall an geeigneter Stelle angebracht.

Insbesondere dann, wenn das freie Ende eines Schenkels bei einem fertig montierten Gegenstand unmittelbar an eine Fläche des Gegenstands anstößt, kann es zweckmäßig sein, wie erfindungsgemäß vorgesehen ist, die entsprechende Endfläche des Schenkels so zu gestalten, daß sich keine störenden Fugen ergeben, diese Fläche beispielsweise rechtwinklig zur Längserstreckung des Schenkels verlaufen zu lassen. In anderen Fällen kann es dagegen zweckmäßig sein, daß freie Ende des Schenkels im Querschnitt abgerundet verlaufen zu lassen.

Der Verbindungsabschnitt kann im Querschnitt gerade sein, er kann auch abgeknickt oder gekrümmt sein. Er kann mit seinem an die Spitze des "V" angrenzenden Bereich so verlaufen, daß dessen Verlängerung in dem Bereich zwischen den Schenkeln verläuft. Bei einer bevorzugten Ausführungsform der Erfindung fluchten die Winkelhalbierenden der von den Schenkeln beider Paare eingeschlossenen Winkel miteinander. Wenn hierbei der Verbindungsabschnitt im Querschnitt gerade ist, verläuft dieser somit unter einem Winkel von 45° zu den Schenkeln der beiden Paare, sofern diese Schenkel jeweils einen Winkel von 90° miteinander einschließen.

Weitere Merkmale und Vorteile der Erfindung ergeben sich aus der nachfolgenden Beschreibung an Hand der Zeichnung, die erfindungswesentliche Einzelheiten zeigt, und aus den Ansprüchen. Die einzelnen Merkmale können je einzeln für sich oder zu mehreren in beliebiger Kombination bei einer Ausführungsform der Erfindung verwirklicht sein. Es zeigen
- Fig. 1: ein Verbindungsstück im Querschnitt,
- Fig. 2: die Einzelheit II in Fig. 1,
- Fig. 3: eine Seitenansicht des in Fig. 1 gezeigten Verbindungsstücks in Richtung des Pfeils III in Fig. 1, gegenüber Fig. 1 verkleinert,
- Fig. 4: vereinfacht einen Tisch, bei dem zwei Verbindungsstücke der in Fig. 1 gezeigten Art einen Tragrahmen für eine Tischplatte mit einem Gestell verbinden. -

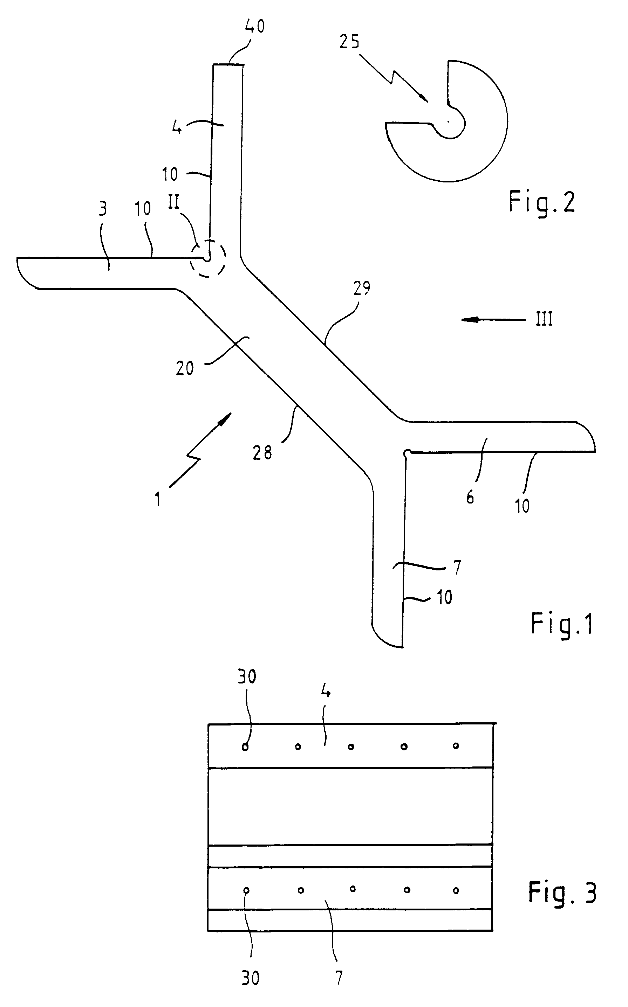

Das Verbindungsstück 1, das in Fig. 1 im Querschnitt gezeigt ist, weist ein erstes Paar von Schenkeln 3, 4 auf, die miteinander einen Winkel von 90° einschließen, und ein zweites Paar von Schenkeln 6, 7, die ebenfalls miteinander einen Winkel von 90° einschließen.

Die Schenkel 3 und 6 einerseits und 4 und 7 andererseits verlaufen mit ihren zur Anlage an zu befestigenten Teilen bestimmten Innenflächen 10 parallel zueinander. Dort, wo die Schenkel eines Paars zusammentreffen, bilden sie die o.g. Spitze des "V" und gehen dort in einen im Querschnitt geraden Verbindungsabschnitt 20 über, dessen Querschnittslängsrichtung unter 45° zur Längsrichtung der Schenkel 3, 4, 6, 7 verläuft.

Damit nicht im Bereich der Innenecke zwischen den Schenkeln eines Paars ein Radius verbleibt, der die exakte Anlage von genau rechtwinkligen Stangen oder rechtwinklig zugeschnittenen Platten an beiden Innenflächen 10 der beiden Schenkel behindern könnte, ist die Innenecke 25, wie Fig. 2 zeigt, etwas ausgespart oder ausgekehlt.

Die Verbindungslinie zwischen den beiden Innenecken 25 verläuft, wie bereits gesagt, unter einem Winkel von 45° relativ zur Querschnitts- Längsrichtung der vier Schenkel des Verbindungsstücks, diese Verbindungslinie (genaue Verbindungsebene) verläuft jedoch nicht mittig zwischen den beiden Seitenflächen 28 und 29 des Verbindungsabschnitts 20. Der Grund hierfür liegt im speziellen Fall in der Erleichterung der Herstellung des Verbindungsstücks im Strangziehverfahren aus Aluminium.

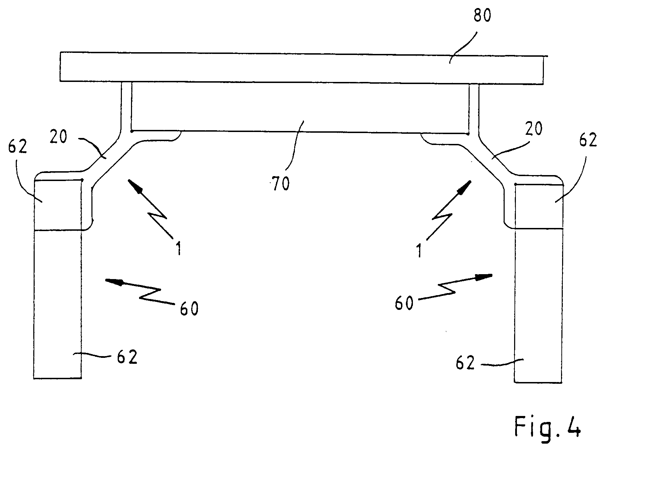

Fig. 3 zeigt die Seitenansicht, in der in den Schenkel 4 und 7 Befestigungslöcher 30 sichtbar sind. Die Schenkel 3 und 6 haben ebenfalls Befestigungslöcher, die jedoch in den Zeichnungen nicht sichtbar sind.

Die Schenkel 3, 6 und 7 sind an ihrem freien Ende im Querschnitt abgerundet. Der Schenkel 4 ist dagegen im Querschnitt und seinem freien Ende rechtwinklig abgeschnitten, weil das im speziellen Beispiel gezeigte Ausführungsbeispiel des Verbindungsstücks dazu bestimmt ist, einen Rahmen mit einer Platte zu tragen, und die Platte in dichter Anlage an einer soeben genannten freien Endfläche 40 liegen soll, ohne daß dort zwischen dem Schenkel 4 und der genannten Platte größere Zwischenräume vorhanden sein sollen.

Fig. 4 zeigt ein Querschnitt durch einen Tisch, bei dem ein Gestell 60 Füße 62 aufweist, die an ihrem oberen Bereich waagrecht verlaufende hier als Stangen 64 bezeichnete Träger tragen, an denen durch zwei Verbindungsstücke 1 ein in Draufsicht rechteckiger Rahmen 70 befestigt ist, der aus vier Stangen mit quadratischem Profil gebildet ist, von denen zwei in den in Fig. 4 oberen Schenkelpaaren der Verbindungsstücke 1 aufgenommen und mit diesen verbunden sind. Der Rahmen 70 trägt eine Tischplatte 80, die über den Rahmen 70 seitlich hinausragt und somit auch das freie Ende des obersten nach oben ragenden Schenkel 4 jedes der beiden Verbindungsstücke überdeckt.

Zur Zeichnungsvereinfachung sind weitere Teile, die zweckmäßigerweise die Stangen 62 im Bereich vor und hinter der Zeichenebene verbinden, nicht dargestellt.

In Fig. 4 verlaufen die Verbindungsabschnitte 20 der Verbindungsstücke 1 einerseits von links unten nach rechts oben, andererseits von rechts unten nach links oben. Hierdurch wird der Rahmen 70, der in der Ansicht der Fig. 4 eine geringere Breite hat als dem Abstand der beiden Stangen 62 entspricht, mit diesen verbunden. Die Tischplatte 80 kann dabei ebenfalls gegenüber den Stangen 62 zurückspringen, wie in Fig. 4 gezeigt, sie könnte aber auch über die Stangen 62 hinausragen, also breiter sein als in Fig. 4 gezeigt. Die gezeigte Art der Verbindung kann aus technischen Gründen zweckmäßig sein oder auch lediglich aus ästhetischen Gründen erwünscht sein.

## Patentansprüche

1. Möbelstück, insbesondere Tisch,
mit mindestens einem Verbindungsstück (1), das zwei über einen Verbindungsabschnitt (20) miteinander verbundene Abschnitte zur Verbindung des Verbindungsstücks (1) mit einem Gestell (60) und mit einem vorzugsweise zum Halten einer Platte (80) bestimmten Rahmen (70) aufweist,
dadurch gekennzeichnet,
daß beide Abschnitte im Querschnitt jeweils ein Paar von V-förmig angeordneten Schenkeln (3,4;6,7) aufweisen, die an der Spitze des "V" verbunden sind, und
daß die Spitzen der beiden "V" voneinander einen kleineren Abstand haben als andere Teile des einen Paars der Schenkel von dem anderen Paar.

2. Möbelstück nach Anspruch 1, dadurch gekennzeichnet, daß im Querschnitt die Verbindungsabschnitte (20) der Verbindungsstücke (1) einerseits von links unten nach rechts oben, und andererseits von rechts unten nach links oben verlaufen.

3. Möbelstück nach einem der vorhergehenden Ansprüche, dadurch gekennzeichnet, daß im Querschnitt der Verbindungsabschnitt (20) gerade ist.

4. Möbelstück nach einem der vorhergehenden Ansprüche, dadurch gekennzeichnet, daß im Querschnitt mindestens einer der Schenkel des einen Paars zu einem Schenkel des anderen Paars parallel ist.

5. Möbelstück nach einem der vorhergehenden Ansprüche, dadurch gekennzeichnet, daß im Querschnitt eine geradlinige Verlängerung des Verbindungsabschnitts über die Spitze des "V" eines der Paare hinaus in einem Bereich zwischen den Schenkeln verläuft.

6. Möbelstück nach einem der vorhergehenden Ansprüche, dadurch gekennzeichnet, daß die Winkelhalbierenden der von den Schenkeln beider Paare eingeschlossenen Winkel miteinander fluchten.

7. Möbelstück nach einem der vorhergehenden Ansprüche, dadurch gekennzeichnet, daß der von den Schenkeln eines Paars eingeschlossenen Winkel 90° ist.

## Claims

1. Piece of furniture, in particular a table,
with at least one connecting member (1) having two sections connected to each other via a connecting section (20) for connecting the connecting member (1) to a stand (60) and to a frame (70) preferentially adapted for supporting a plate (80),
characterized in that
each cross section of both sections has a pair of V-shaped disposed legs (3, 4; 6, 7) which are connected at the tip of the "V" and
the tips of both "V's" have a separation with respect to each other which is smaller than that of other portions of one pair of legs from the other pair.

2. Piece of furniture according to claim 1, characterized in that the connecting sections (20) of the connecting member (1) have a cross section which, at one end extends from the lower left towards the upper right and, at the other end, from the lower right towards the upper left.

3. Piece of furniture according to any one of the preceding claims, characterized in that the connecting section (20) has a straight cross section.

4. Piece of furniture according to any one of the preceding claims, characterized in that the cross section of at least one of the legs of one pair is parallel to a leg of the other pair.

5. Piece of furniture according to any one of the preceding claims, characterized in that, as viewed in cross section, a straight line extension of the connecting section beyond the tip of the "V" of one of the pairs travels in a region between the legs.

6. Piece of furniture according to any one of the preceding claims, characterized in that the angular bisectors of the angles enclosed by the legs of both pairs are aligned with another.

7. Piece of furniture according to any one of the preceding claims, characterized in that the angle subtended by the legs of one pair is 90°.

## Revendications

1. Pièce de mobilier, en particulier table,
comprenant au moins un élément de liaison (1), lequel présente deux tronçons reliés l'un à l'autre au moyen d'un tronçon de liaison (20) pour la jonction de l'élément de liaison (1) à un châssis (60), et comprenant un cadre (70) destiné de préférence au maintien d'une plaque (80),
caractérisée en ce que :
les deux tronçons présentent en section transversale respectivement une paire de bras agencés sous la forme d'un V (3, 4 ; 6, 7), qui sont reliés à la pointe du "V", et
en ce que les pointes des deux "V" présentent l'une par rapport à l'autre une distance plus faible que d'autres parties de l'une des paires de bras depuis l'autre paire.

2. Pièce de mobilier selon la revendication 1, caractérisée en ce que les tronçons de liaison (20) des éléments de liaison (1) s'étendent en section transversale d'une part depuis la gauche et en bas vers la droite et en haut, et d'autre part depuis la droite et en bas vers la gauche et en haut.

3. Pièce de mobilier selon l'une des revendications précédentes, caractérisée en ce que le tronçon de liaison (20) est droit en coupe transversale.

4. Pièce de mobilier selon l'une des revendications précédentes, caractérisée en ce que, en coupe transversale, l'un au moins des bras d'une paire est parallèle à un bras de l'autre paire.

5. Pièce de mobilier selon l'une des revendications précédentes, caractérisée en ce que, en coupe transversale, un prolongement rectiligne du tronçon de liaison au-delà de la pointe du "V" de l'une des paires s'étend dans une région entre les bras.

6. Pièce de mobilier selon l'une des revendications précédentes, caractérisée en ce que les bissectrices des angles enfermés par les bras des deux paires sont mutuellement alignées.

7. Pièce de mobilier selon l'une des revendications précédentes, caractérisée en ce que l'angle enfermé par les bras d'une paire est égal à 90°.
